# EUROPEAN PATENT APPLICATION

(11) **EP 2 974 588 A1**
(43) Date of publication of application: **20.01.2016**
(21) Application number: 14765252.3
(22) Date of filing: 24.02.2014
(51) Int. Cl.: A01D 69/00, A01D 41/12, A01D 67/00

(54) **DISPLAY DEVICE FOR WORK MACHINES**

(30) Priority: 13.03.2013 JP 2013050742
(71) Applicant: Yanmar Co., Ltd., Osaka-shi, Osaka 530-8311 (JP)
(72) Inventor: KOIKE, Yusuke, Osaka-shi, Osaka 530-8311 (JP); YAMAMOTO, Shingo, Osaka-shi, Osaka 530-8311 (JP); NISHIKAWA, Masahiro, Osaka-shi, Osaka 530-8311 (JP); ICHINOSE, Nobuhiko, Osaka-shi, Osaka 530-8311 (JP); MIWA, Toshiyuki, Osaka-shi, Osaka 530-8311 (JP); MIYAMOTO, Munenori, Osaka-shi, Osaka 530-8311 (JP)
(74) Representative: Jostarndt, Hans-Dieter
(86) International application number: PCT/JP2014/054275
(87) International publication number: WO 2014/141860

(57) **Abstract**

The purpose of the present invention is to provide a display device for work machines that is capable of obtaining, when required, information required for the operation of a work machine or a work device, without being conscious of the information acquisition. A display device (27) for a combine (1) being a work machine capable of interruption display of any information on a display screen (30) and wherein display of information in relation to the combine (1) or a harvesting unit (5) or threshing unit (9), etc. being work devices provided in the combine (1), occurs via an interruption display screen (38) being one embodiment of interruption display, when a prescribed operation happens in relation to the combine (1), the harvesting unit (5), or the threshing unit (9), etc.

## Description

### Technical Field

The present invention relates to a display device for work machines.

### Background Art

Conventionally, a display device for displaying operation state of a work machine such as a combine is known. Not only traveling speed of the work machine, engine rotation speed, engine load rate and work state of the work machine but also various alarms are displayed. For example, concerning a hydraulic shovel, a display device is known which displays interruptively predetermined warning logo in a liquid crystal display device (display part) provided in a seat so as to remind an operator to be careful. For example, an art of the Patent Literature 1 is so.

However, in the display device of the Patent Literature 1, when posture of a work machine is adjusted or setting of a work device provided in the work machine is changed, the posture of the work machine or an actual set value of the work device is not displayed interruptively. Accordingly, for adjusting the posture of the work machine or changing the setting of the work device, operation for displaying the actual set value is required separately, whereby the operation of the work machine and the work device may be complicated.

### Prior Art Reference

### Patent Literature

Patent Literature 1: the Japanese Patent Laid Open Gazette 2011-231488

### Disclosure of Invention

### Problems to Be Solved by the Invention

The present invention is provided for solving the above problem, and the purpose of the present invention is to provide a display device for a work machine in which information required for operating the work machine or a work device can be obtained when required without being conscious of obtain of the information.

### Means for Solving the Problems

The problems to be solved by the present invention have been described above, and subsequently, the means of solving the problems will be described below.

According to the present invention, in a display device of a work machine in which optional information can be displayed interruptively on a display screen, when predetermined operation concerning the work machine or a work device provided in the work machine is performed, information about the work machine or the work device is displayed interruptively.

According to the present invention, adjustment of posture of the work machine or operation of the work device is set to be the predetermined operation, and information of setting of the posture of the work machine or information of setting of the work device is displayed interruptively.

### Effect of the Invention

The present invention brings the following effects.

According to the present invention, following predetermined operation, information required for the operation is displayed interruptively. Accordingly, at the time of operation of the work machine or the work device, required information can be obtained when required without being conscious of obtain of the information.

According to the present invention, information required for the adjustment of the posture of the work machine or the operation of the work device is displayed interruptively. Accordingly, at the time of operation of the work machine or the work device, required information can be obtained when required without being conscious of obtain of the information.

### Brief Description of Drawings

[Fig. 1] Fig. 1 is a side view of a combine which is a work machine of an embodiment according to the present invention.
[Fig. 2] Fig. 2 is a block diagram of a control configuration of the combine which is the work machine of the embodiment according to the present invention.
[Fig. 3] Fig. 3(a) is a drawing of a configuration of a display screen of a display device of the combine which is the work machine of the embodiment according to the present invention. Fig. 3(b) is a drawing of a state in which an interruption display screen is displayed in the display screen of the display device of the combine which is the work machine of the embodiment according to the present invention.

### Detailed Description of the Invention

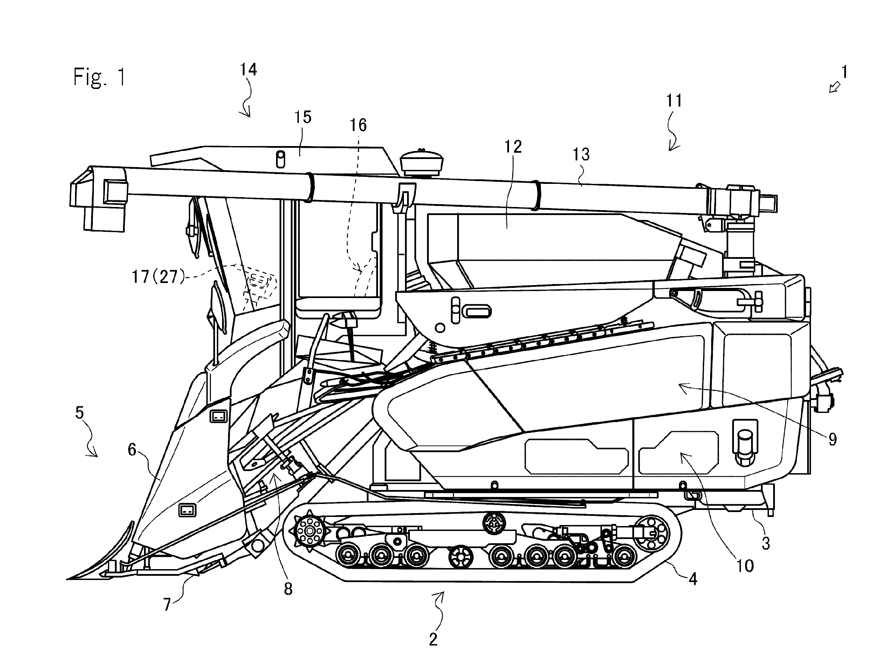

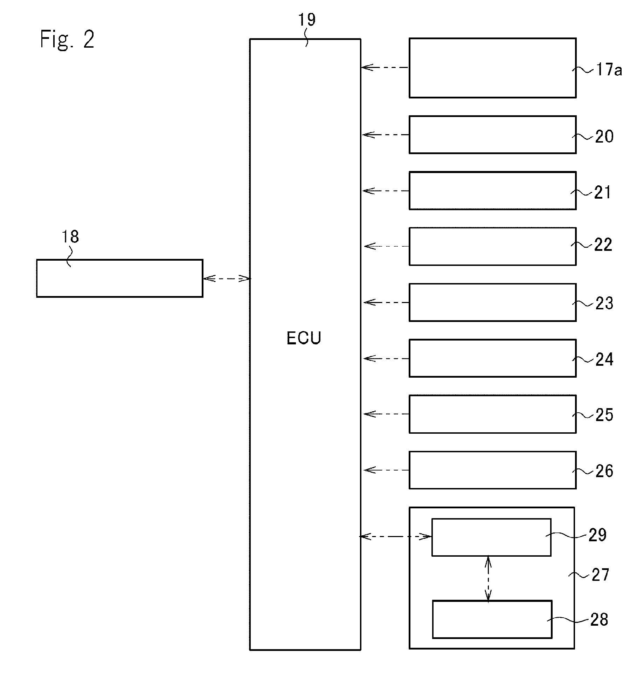

Firstly, a combine having a display device 27 which is an embodiment of the present invention is explained referring to Figs. 1 and 2. A work machine having the display device 27 is not limited to this embodiment and may be a work machine such as a tractor or a backhoe.

As shown in Figs. 1 and 2, in a combine 1, a traveling part 2, a harvesting part 5 which is the work machine, a threshing part 9, a selection part 10, a grain storage part 11, an operation part 14 and the like are provided on a body frame 3.

The traveling part 2 makes a machine body travel forward or rearward. The traveling part 2 is provided below the body frame 3. The traveling part 2 is configured by a crawler traveling device 4 having a pair of left and right crawlers. In the traveling part 2, a traveling speed sensor 20 detecting a traveling speed of the machine body is provided (see Fig. 2).

The harvesting part 5 harvests grain culms on the field. The harvesting part 5 is provided at a front end of the body frame 3 (in a front part of machine body) so as to be movable vertically. The harvesting part 5 raises the grain culms on the field with a raising device 6, cuts plant foot of the grain culms after raised with a cutting device 7, and conveys the grain culms after cut toward the threshing part 9 with a cutting device 8.

The threshing part 9 threshes the grain culms. The threshing part 9 is provided in a left front part of the body frame 3 and behind the harvesting part 5. The threshing part 9 receives the grain culms conveyed from the harvesting part 5, threshes the conveyed grain culms with a threshing cylinder and the like, and drops the threshed object to the selection part 10. In the threshing part 9, a threshing part load sensor 24 detecting load of the threshing part 9 is provided (see Fig. 2).

The selection part 10 sorts out the threshed object to grains and waste straw. The selection part 10 is provided in a left part of the body frame 3 and below the threshing part 9. The selection part 10 sorts out the threshed object dropped from the threshing part 9 to grains, grains in ear, unthreshed grains, waste straw, dust and like by shaking sorting with a shaking sorting device and wind sorting. Then, the selection part 10 conveys the sorted grains to the grain storage part 11, conveys the grains in ear and the unthreshed grains to the threshing part 9, and discharges the waste straw and the dust to the outside. In the selection part 10, a selection part load sensor 25 detecting load of the selection part 10 is provided (see Fig. 2).

The grain storage part 11 stores the threshed and sorted grains. The grain storage part 11 is provided in a right rear part of the body frame 3 and at the right of the threshing part 9 and the selection part 10. The grain storage part 11 includes a grain tank 12, a grain discharging device 13 and the like. The grain storage part 11 stores the grains conveyed from the selection part 10 in the grain tank 12, and discharges the grains stored in the grain tank 12 outside the machine body with the grain discharging device 13. In the grain tank 12, a weight sensor 23 detecting a grain storage amount is provided (see Fig. 2).

In the operation part 14, an operator operates the combine 1. The operation part 14 is provided in a right front part of the body frame 3 and at the right of the harvesting part 5. In the operation part 14, inside a cabin 15, an operation instrument 17 operating the combine 1 and the display device 27 (see Fig. 2) are arranged around a seat 16. The operation instrument 17 includes operation instruments adjusting a lateral height and longitudinal height of the combine 1 and operation instruments operating various work devices such as the harvesting part 5 and the threshing part 9. In the operation instrument 17, an operation amount detection sensor 17a detecting operation amounts of the operation instruments is provided. An ECU 19 (see Fig. 2) controlling an engine 18 and the work devices by a signal from the operation amount detection sensor 17a is provided.

As shown in Fig. 2, the ECU 19 controls the engine 18 and the work devices. In the ECU 19, various programs are stored so as to control the engine 18 and the work devices. The ECU 19 can perform predetermined calculation according to the programs and can store results of the calculation. Substantially, the ECU 19 may be configured by connecting a CPU, a ROM, a RAM, a HDD and the like with a bus, or may alternatively be a one-chip LSI or the like.

The ECU 19 is connected to the traveling speed sensor 20 of the machine body and a rotation speed sensor 21 of the engine 18 and can obtain a traveling speed and a rotation speed of the engine 18 detected by the traveling speed sensor 20 and the rotation speed sensor 21.

The ECU 19 is connected to a fuel residual amount meter 22 and can obtain a fuel residual amount of a fuel tank (not shown) detected by the fuel residual amount meter 22.

The ECU 19 is connected to the weight sensor 23 of the grain tank 12 and can obtain a signal from the weight sensor 23 of the grain tank 12. Though the weight sensor 23 detects a content quantity of the grain tank 12 in this embodiment, the detection means is not limited thereto and any member which can detect the content quantity may be used.

The ECU 19 is connected to the threshing part load sensor 24 and the selection part load sensor 25, and can obtain signals from the threshing part load sensor 24 and the selection part load sensor 25.

The ECU 19 is connected to a transmission 26 and can obtain a signal from the transmission 26.

The ECU 19 is connected to the engine 18 (various sensors and a fuel injection device (not shown) provided in the engine 18), and can obtain signals from the sensors and control the engine 18.

The ECU 19 is connected to a control device 29 of the display device 27 and can obtain signals from the control device 29.

The ECU 19 is connected to the operation amount detection sensor 17a and can obtain a signal from the operation amount detection sensor 17a.

In the combine 1, by operation of the operation instruments in the operation part 14, power of the engine 18 is transmitted to the work devices, and while the machine body is made travel with the traveling part 2, the harvesting part 5 harvests grain culms on the field, the threshing part 9 threshes the grain culms from the harvesting part 5, the selection part 10 sorts out the threshed object from the threshing part 9, and the grain storage part 11 stores the grains from the selection part 10 and simultaneously discharges the waste straw from the threshing part 9 to the outside.

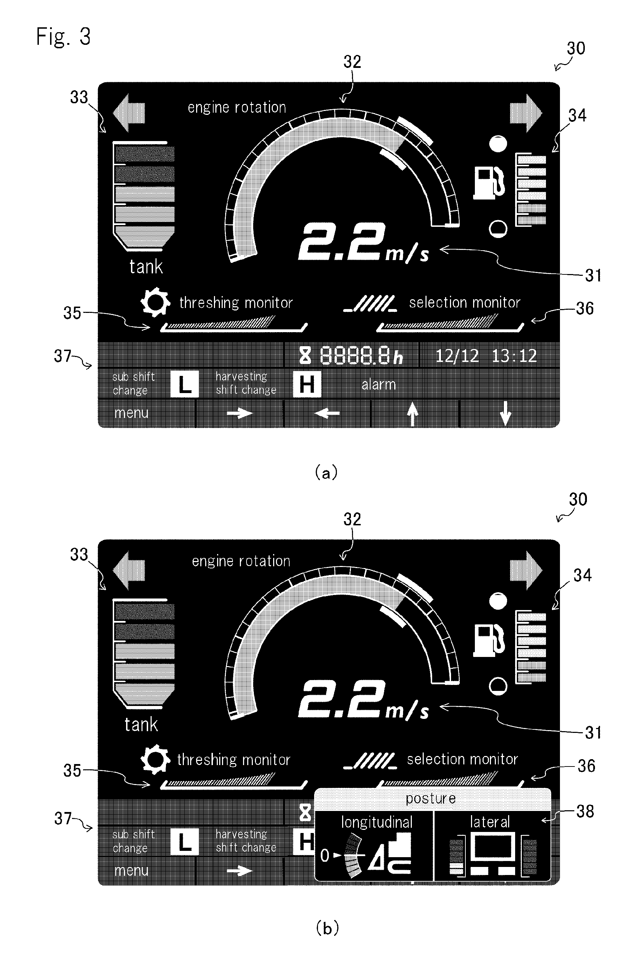

Next, the display device 27 is explained concretely referring to Figs. 2 and 3.

As shown in Fig. 2, the display device 27 displays various kind of information concerning the combine 1. The display device 27 includes a liquid crystal display 28 and the control device 29. The liquid crystal display 28 is arranged so that an operator sitting on the seat 16 of the operation part 14 can look and operate the liquid crystal display 28 (see Fig. 1). The display device 27 can display graphics corresponding to signals transmitted from the control device 29.

As shown in Fig. 3, the liquid crystal display 28 displays characters and graphics corresponding to transmitted signals and signals are inputted thereby. The liquid crystal display 28 may be configured by a touch panel which displays characters and graphics and to which signals can be inputted by touching a screen. The liquid crystal display 28 can display a traveling speed, a rotation speed of the engine 18, a grain storage amount, a fuel residual amount, a threshing part load, a selection part load, an operation time, speed change indication, and various alarms. The characters and graphics displayed on a display screen 30 of the liquid crystal display 28 are not limited to those of this embodiment.

At a substantially center of the display screen 30 of the liquid crystal display 28, a traveling speed meter 31 which displays a traveling speed with a numerical value is arranged. In the display screen 30, above the traveling speed meter 31, a rotation speed meter 32 which displays a rotation speed of the engine 18 is arranged. The rotation speed meter 32 is configured by a graphic which imitates a circular meter.

In a left part of the display screen 30, a grain content quantity meter 33 which displays a content quantity of the grain tank 12 is arranged. The grain content quantity meter 33 is configured by a graphic which imitates the grain tank 12 and has a unit scale as a standard. In a right part of the display screen 30, a fuel residual amount meter 34 which displays a fuel residual amount is arranged. Similarly to the grain content quantity meter 33, the fuel residual amount meter 34 is configured by a graphic which imitates a level gauge and has a unit scale as a standard.

In the display screen 30, below the traveling speed meter 31, a threshing monitor 35 and a selection monitor 36 are arranged. The threshing monitor 35 is configured so that a predetermined area can be displayed with predetermined color. The selection monitor 36 is configured so that a predetermined area can be displayed with predetermined color. In the display screen 30, below the threshing monitor 35 and the selection monitor 36, an information display area 37 which displays an operation time, state of the transmission 26 and various alarms with numeral values and characters is arranged.

The liquid crystal display 28 is connected to the control device 29 and can obtain signals concerning a traveling speed, a rotation speed, a grain storage amount, a fuel residual amount, a threshing part load, a selection part load, an operation time, speed change indication, and various alarms from the control device 29.

The control device 29 controls the liquid crystal display 28. The control device 29 is configured integrally with or separately from the liquid crystal display 28 or the ECU 19. The control device 29 stores various programs for controlling the liquid crystal display 28. The control device 29 can perform predetermined calculation according to the programs and can store results of the calculation. Substantially, the control device 29 may be configured by connecting a CPU, a ROM, a RAM, a HDD and the like with a bus, or may alternatively be a one-chip LSI or the like.

The control device 29 is connected to the ECU 19 and can obtain signals concerning a traveling speed, a rotation speed, a grain storage amount, a fuel residual amount, a threshing part load, a selection part load, an operation time, speed change indication, and various alarms from the ECU 19.

The control device 29 can display predetermined characters and graphics on the liquid crystal display 28 based on the signals concerning the traveling speed, the rotation speed, the grain storage amount, the fuel residual amount, the threshing part load, the selection part load, the operation time, the speed change indication, and the various alarms from the ECU 19. The control device 29 can obtain various signals inputted via the liquid crystal display 28. Namely, the control device 29 can display information concerning the combine 1 on the liquid crystal display 28 based on the signals and transmit input signals from the liquid crystal display 28 to the ECU 19.

Next, information displayed on the liquid crystal display 28 by the control device 29 of the display device 27 is explained referring to Figs. 2 and 3.

As shown in Fig. 2, when the signals concerning the traveling speed, the rotation speed, the grain storage amount, the fuel residual amount, the threshing part load, the selection part load, the operation time, the speed change indication, and the various alarms are received from the ECU 19, the control device 29 transmits signals so as to display predetermined characters graphics on the liquid crystal display 28 based on the received signals.

Concretely, as shown in Fig. 3, in the traveling speed meter 31 of the liquid crystal display 28, the traveling speed is displayed with a numeral value based on the signal concerning the traveling speed from the ECU 19. In the rotation speed meter 32 of the liquid crystal display 28, the rotation speed is displayed by lightening up a part of scale corresponding to the signal concerning the rotation speed from the ECU 19 with predetermined color.

In the grain content quantity meter 33 of the liquid crystal display 28, the grain content quantity is displayed by lightening up a graphic in scale corresponding to the signal concerning the grain content quantity from the ECU 19 with predetermined color. In the fuel residual amount meter 34 of the liquid crystal display 28, the fuel residual amount is displayed by lightening up a graphic in scale corresponding to the signal concerning the fuel residual amount from the ECU 19 with predetermined color.

In the threshing monitor 35 of the liquid crystal display 28, the threshing part load is displayed by lightening up a graphic in an area corresponding to the signal concerning the threshing part load from the ECU 19 with predetermined color. In the selection monitor 36 of the liquid crystal display 28, the selection part load is displayed by lightening up a graphic in an area corresponding to the signal concerning the selection part load from the ECU 19 with predetermined color. In the information display area 37 of the liquid crystal display 28, the predetermined information is displayed with numerical values and characters based on the signals concerning the operation time, the state of the transmission 26 and the alarms from the ECU 19.

A mode of interruption display of the display screen 30 by the control device 29 of the display device 27 is explained referring to Fig. 3. In this embodiment, a mode of interruption display at the time of adjusting posture of the combine 1 is explained concretely.

As shown in Fig. 3(a), the control device 29 obtains the signals concerning the traveling speed, the rotation speed, the grain storage amount, the fuel residual amount, the threshing part load, the selection part load, the operation time, the speed change indication, and the various alarms via the ECU 19. Based on the obtained signals, the control device 29 lightens up the predetermined graphics in the traveling speed meter 31, the rotation speed meter 32, the grain content quantity meter 33, the fuel residual amount meter 34, the threshing monitor 35, the selection monitor 36 and the information display area 37 of the liquid crystal display 28.

When the operation instrument 17 concerning longitudinal posture or lateral posture is operated, a signal from the operation amount detection sensor 17a is transmitted to the control device 29 (see Fig. 2). As shown in Fig. 3(b), when the signal from the operation amount detection sensor 17a is received, the control device 29 judges that the operation instrument 17 concerning longitudinal posture or lateral posture is operated, and displays interruptively an interruption display screen 38 on the display screen 30. Vertical posture (distance from the ground surface) is treated similarly.

The interruption display screen 38 is configured by a substantially rectangular screen which is smaller than the display screen. The interruption display screen 38 displays information concerning the posture of the combine 1. Concretely, the interruption display screen 38 displays an actual set value of the longitudinal posture of the combine 1 and an actual set value of the lateral posture of the combine 1.

The control device 29 displays interruptively the interruption display screen 38 in a part of the display screen 30 in which the information not required immediately by an operator operating the combine 1 is displayed. As a concrete mode of the interruption display, the control device 29 displays the interruption display screen 38 in a part of the information display area 37 of the display screen 30 in which time and warning are displayed. At this time, the control device 29 displays the interruption display screen 38 so as to make it overlap the part of the information display area 37 in which time and warning are displayed. According to this mode of the interruption display, an operator can recognize easily that the interruption display screen 38 is displayed on the display screen 30. The operator can obtain the information concerning the posture of the combine 1 from the interruption display screen 38 while obtaining continuously information required for operating the combine 1 from the display screen 30.

During the operation instrument 17 concerning the longitudinal posture or the lateral posture is judged to be operated according to the signal from the operation amount detection sensor 17a, the control device 29 displays interruptively the interruption display screen 38. When the signal from the operation amount detection sensor 17a is stopped and the operation of the operation instrument 17 concerning the longitudinal posture or the lateral posture is judged to be stopped, the control device 29 cancels the interruption display screen 38 simultaneously with the stop of the operation or after the stop of the operation for a predetermined period. Namely, the control device 29 displays the time and warning of the information display area 37 again simultaneously with the stop of the operation or after the stop of the operation for the predetermined period.

As another mode of the interruption display of the interruption display screen 38, the control device 29 cancels the interruption display screen 38 after that the operation instrument 17 concerning the longitudinal posture or the lateral posture is judged to be operated according to the signal from the operation amount detection sensor 17a for a predetermined period. Namely, the control device 29 displays the time and warning of the information display area 37 again after start of adjustment of posture for the predetermined period.

Similarly to the case mentioned above, when the operation instrument 17 concerning the working device of the combine 1 is judged to be operated according to the signal from the operation amount detection sensor 17a obtained via the ECU 19, the control device 29 displays interruptively the interruption display screen 38 on the display screen 30. At this time, the interruption display screen 38 displays an actual set value of the operated working device of the combine 1.

As the above, in the display device 27 of the combine 1 which is a work machine according to the present invention in which optional information can be displayed interruptively on the display screen 30, when predetermined operation concerning the combine 1 or the harvesting part 5, the threshing part 9 or the like which is the work device of the combine 1 is performed, information concerning the combine 1 or the harvesting part 5, the threshing part 9 or the like is displayed via the interruption display screen 38 which is an embodiment of the interruption display.

According to the configuration, following predetermined operation, information required for the operation is displayed interruptively. Accordingly, at the time of operation of the operation instrument 17 of the combine 1 or the harvesting part 5, the threshing part 9 or the like, required information can be obtained when required without being conscious of obtain of the information.

The operation of the operation instrument 17 which is adjustment of posture of the combine 1 or operation of the harvesting part 5, the threshing part 9 or the like is set to be the predetermined operation, and information of setting of the posture of the combine 1 or information of setting of the harvesting part 5, the threshing part 9 or the like is displayed via the interruption display screen 38 which is an embodiment of the interruption display.

According to the configuration, the information required for the adjustment of the posture of the combine 1 or the operation of the harvesting part 5, the threshing part 9 or the like is displayed interruptively. Accordingly, at the time of operation of the operation instrument 17 of the combine 1 or the harvesting part 5, the threshing part 9 or the like, required information can be obtained when required without being conscious of obtain of the information.

In this embodiment, the mode of the interruption display screen 38 in the case in which the adjustment of the posture of the combine 1 and the operation of the work devices are performed is explained. However, the configuration is not limited thereto and a configuration in which information which is not displayed on the actual display screen 30 of the display device 27 is displayed by transmission of signals by operating the operation instrument 17 may be used.

### Industrial Applicability

### The present invention can be used for an art of a display device for work machines. Description of Notations

- 1: combine
- 5: harvesting part
- 9: threshing part
- 30: display screen
- 38: interruption display screen

## Claims

1. A display device of a work machine in which optional information can be displayed interruptively on a display screen,
**characterized in that**
when predetermined operation concerning the work machine or a work device provided in the work machine is performed, information about the work machine or the work device is displayed interruptively.

2. The display device of the work machine according to claim 1, wherein adjustment of posture of the work machine or operation of the work device is set to be the predetermined operation, and information of setting of the posture of the work machine or information of setting of the work device is displayed interruptively.
